# EUROPEAN PATENT SPECIFICATION

(11) **EP 4 183 513 B1**
(45) Date of publication and mention of the grant of the patent: **11.11.2026**
(21) Application number: 22202227.9
(22) Date of filing: 15.11.2019
(51) Int. Cl.: B22F 10/25, B22F 10/30, B22F 12/20, B22F 12/58, B22F 12/90, B22F 10/85, B22F 12/41, B22F 12/45, B22F 12/53, B22F 12/55, B23K 26/06, B23K 26/14, B23K 26/342, B33Y 30/00, B33Y 50/02, B23K 26/70, B23K 26/211

(54) **MULTI-MODE LASER DEVICE FOR METAL MANUFACTURING APPLICATIONS**
MULTIMODE-LASERGERÄT FÜR ANWENDUNGEN IN DER METALLBEARBEITUNG
DISPOSITIF LASER MULTIMODE POUR APPLICATIONS DE FABRICATION MÉTALLIQUE

(30) Priority: 03.07.2019 US 201962870651 P; 13.11.2019 US 201916683236
(43) Date of publication of application: 24.05.2023
(62) Document number(s) of the earlier application(s) in accordance with Art. 76 EPC: 19806165.7 / 3 993 943
(73) Proprietor: Directedmetal 3D SL, 23700 Linares (ES)
(72) Inventor: MATTHEWS, Brian, Palm Beach Gardens, 33418 (US); HOPPE, Lukas, 23700 Linares (ES); MOREIRA OSORIO, Lesther, 23700 Linares (ES)
(74) Representative: Aguilar Catalán, Blanca

(56) References cited:
- JP-A- 2007 007 698
- US-A1- 2015 255 105
- US-A1- 2018 318 929
- US-A1- 2019 039 175

## Description

This invention relates generally to the field of laser-based manufacturing using laser-based additive manufacturing (AM), laser cladding, laser welding, laser cutting, laser texturing and laser polishing methods. The laser AM, laser cladding and laser welding (non-autogenous mode) processes employ a direct metal deposition (DMD) process utilizing a distributed laser light source to focus multiple laser beams onto a working surface where the laser focal point intersects with metal feed material (wire and/or powder) to form a metal layered construct on a substrate under computer control. The laser welding (autogenous mode), laser cutting, laser texturing and laser polishing processes utilize a distributed laser light source to focus multiple laser beams onto a work surface where the laser focal point(s) intersect with the metal substrate to enable welding, (autogenous), cutting, texturing or polishing of the work surface under computer control.

### DESCRIPTION OF RELATED ART

Fabrication of three-dimensional metallic components using a layer-by-layer laser energy source deposition method was first reported in 1978 by Breinan and Kear. In 1982, U.S. Pat. No. 4,323,756 was issued to Brown et al., describing a method for the production of bulk, rapidly solidified metallic particles, with a particular application in the fabrication of certain gas turbine engine components including discs and knife-edge air seals. Such three-dimensional, laser-assisted metal deposition processes comprise a field of additive manufacturing (AM) termed Direct Metal Deposition (DMD).

Recently, various groups around the world have been working on different types of layered manufacturing techniques for fabrication of metallic components.

Recent innovations include the integration of lasers with multi-axis computer numeric control (CNC) machines using a laser to focus a beam on the metal feed material through a DMD nozzle to fabricate a three-dimensional component. Computer Aided Design (CAD) and Computer Aided Manufacturing (CAM) software is integrated with the DMD process to drive the nozzle to fabricate precise three-dimensional component renderings. Previous approaches utilize a nozzle where the laser beam enters through the center of the nozzle with the metal feed material introduced through the nozzle via a coaxial or side feed mechanism. U.S. Pat. No. 7,765,022 introduced an approach utilizing this configuration using a diode laser source in 2010. Use of a diode laser source provides advantages by improving response times to power adjustments to precisely control the DMD process. In U.S. Pat. No. 7,765,022, a central diode laser system is combined with an optical monitor and a side-mounted powder/wire/tape delivery system. In this approach, either wire or powder feed material is used, but no capability is provided for use of wire or powder feed material within the same DMD device. Facilitation of wire or powder feed material through a central axis in the same DMD device combined with use of an array of off-axis, diode laser fibers or diode-pumped solid-state laser fibers to melt the feed material has not been presented, except by reference to the cross-referenced related applications.

Pat. CN109338359A describes a high-speed laser cladding head for precise matching of multiple metal powder streams a multiple laser beams in which a high-speed laser coating head participates, which matches multiple metal powder streams and multiple laser beams so that the rate of use of metallic powder in a head is as high as possible and without jams. The coating head comprises a column fixing base, a transition connection sleeve and a powder feeding head.

This device has a series of limitations, including the following:
- It includes external lasers in which the energy is transmitted by optical fiber to the head, causing loss of energy and the possibility of fiber breakage and fiber connector damage from heat, mechanical interactions, and reflection of laser radiation during operation.
- The system described applies only to powder cladding operations, not applicable to additive manufacturing, wire or power cladding, laser welding, laser cutting, laser texturing and laser polishing.
- The system described applies only to powder cladding operations, not applicable to additive manufacturing, wire or power cladding, laser welding, laser cutting, laser texturing and laser polishing.
- The system does not address laser reflection protection. This can cause the destruction of the components that the lasers generate by shortening the last life of the system.
- The number of lasers participating in the invention is 2 or 3 lasers.
- The system is only capable of processing powder.
- The system does not described inert gas distribution which is a critical aspect of the process.
- The system applies only to multi-beam powder nozzles.
- The system does not address head connections.

These limitations are equally applicable to the documents WO 2011082582A1, CN 107083550A, CN108637251A, and US 2017050268A1.

Document US 2018/318929 A1 discloses an additive manufacturing device in a compact, direct metal deposition (DMD) 3-dimensional printing deposition head. The device delivers laser power, simultaneous wire and powder deposition, inline process controls, wire feed driver/precision control, and shield gas via the same deposition head.

Document JP 2007 007698 A discloses a laser processing head that simultaneously performs laser processing, such as laser welding, and processing, such as arc welding, and is capable of monitoring the state of the processing portion.

Document US 2015/255105 A1 discloses a method for controlling a power of a laser emitting unit and associated apparatus by using a determined power of a reflected light sensed by a photo detector integrated circuit.

Document US 2019/039175 A1 discloses an apparatus and a method for thermal processing by means of a laser beam emitted by at least one radiation source. In the beam path of the laser beam between the radiation source and a processing region, there is arranged one element configured to modify the intensity of the laser beam.

### SUMMARY OF THE INVENTION

The invention is defined by the independent claim. The dependent claims define further embodiments of the invention.

### BRIEF DESCRIPTION OF THE DRAWINGS

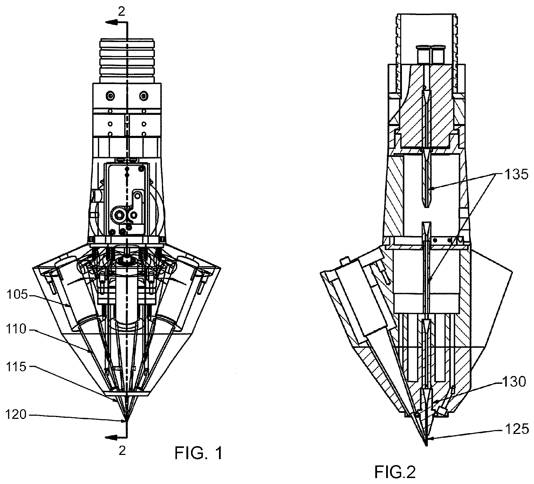

FIG. 1 shows a side view of an embodiment for a multimode laser device for metal manufacturing applications featuring its supply and laser connections.
FIG. 2 shows a cut-away side view of an embodiment for a multi-mode laser device for metal manufacturing applications featuring its supply and laser connections.

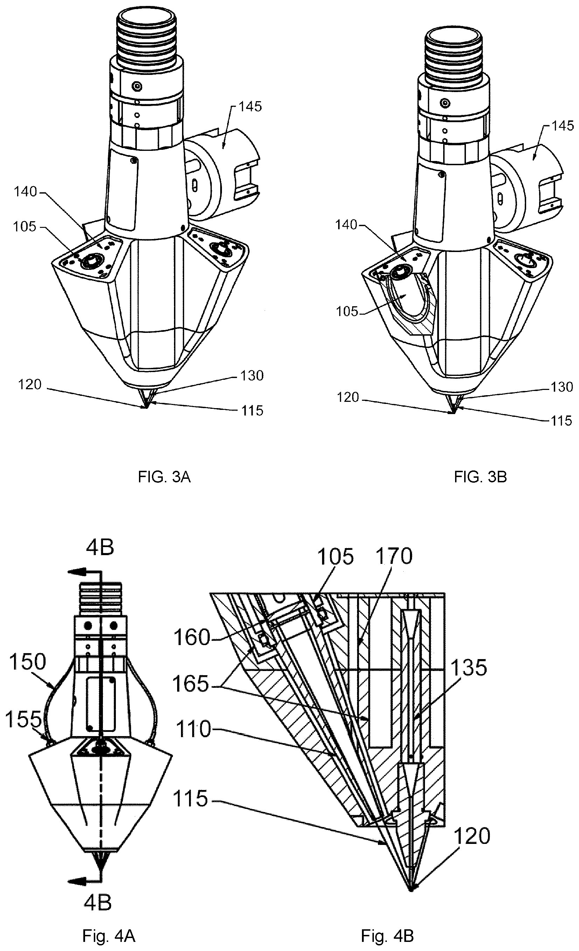

FIG. 3A and FIG. 3B show a perspective and expanded view of an embodiment for a multi-mode laser device for metal manufacturing applications illustrating its plurality of laser beams emanating from a plurality of laser sources, including but not exclusively, external fiber-coupled diode laser(s) or external fiber-coupled diode-pumped solid state laser(s) (DPSSL), or internal fiber-coupled or fiber-free solid-state diode lasers or solid-state lasers. The multiple lasers are configured as insertable laser assemblies which are precision adjustable and securable with locking mechanisms to deliver high-effective power to a precisely oriented focal point comprising the energy source of the laser manufacturing process.
FIG. 4A and FIG. 4B show a perspective and cut-away view of an external fiber-coupled insertable laser assembly for an embodiment of a multi-mode laser device for metal manufacturing applications, illustrating the arrangement of the laser fibers, laser-fiber couplings, collimation and focusing optics, shield gas protection and cooling system.

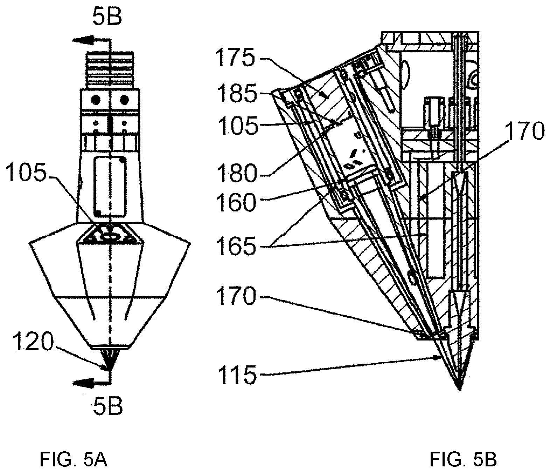

FIG. 5A and FIG. 5B show a perspective and cut-away view of an internal fiber-coupled or fiber-free insertable laser assembly for an embodiment of a multi-mode laser device for metal manufacturing applications, illustrating the arrangement of the internal solid state diode laser(s), collimation and focusing optics, shield gas protection, back-reflection protection, integrated aiming beam, and cooling system.

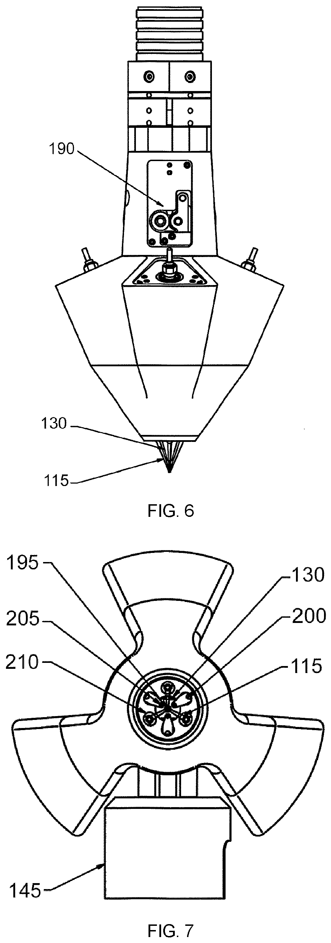

FIG. 6 shows a perspective view of an embodiment for a multi-mode laser device for metal manufacturing applications featuring its integrated wire feed (pull) system.
FIG. 7 shows a bottom view of an embodiment for a multi-mode laser device for metal manufacturing applications featuring the underside of the device illustrating its central deposition nozzle with wire feed material orifice, powder feed material nozzles, powder feed material nozzle orifices, process gas orifices and laser beams.

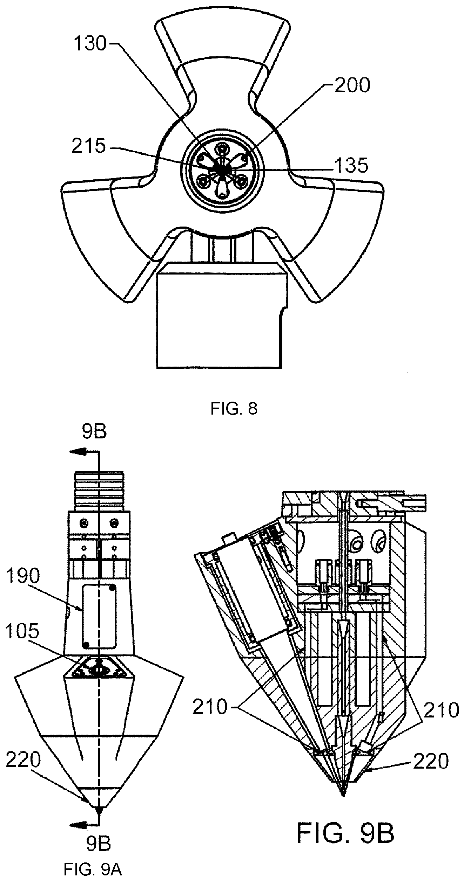

FIG. 8 shows a bottom view of an embodiment for a multi-mode laser device for metal manufacturing applications featuring two methods for delivering powder coaxially as either a coniform nozzle supplied distribution or multiple independent off-axis powder nozzles providing individual collimated jets of powder located circumferentially surrounding the wire feed channel.
FIG. 9A and FIG. 9B show a perspective and cut-away view of an embodiment for a multi-mode laser device for metal manufacturing applications featuring its process gas distribution and supply channels to the working surface of the process, in conjunction with a detachable shield gas diffuser.

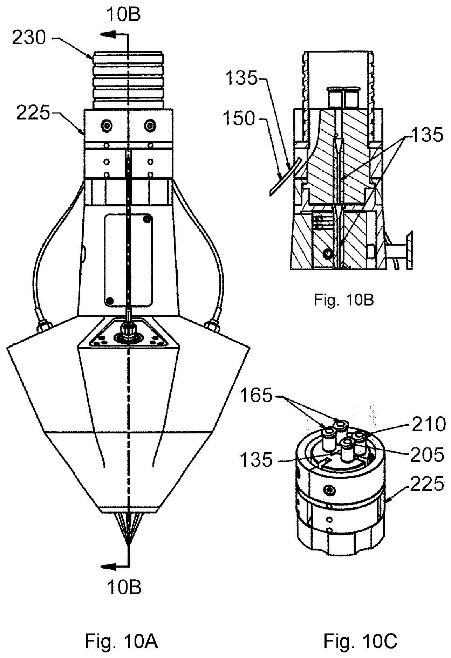

FIG. 10A, FIG. 10B and FIG. 10C show a perspective, cut-away and expanded view of an embodiment for a multi-mode laser device for metal manufacturing applications featuring its head supply neck coupling which facilitates a quick-disconnect and rapid reconnection of the laser device to the incoming supply lines contained in the supply conduit. The supply lines comprise electrical, water cooling, process gas, wire material guide channel and powder feed connections, in addition to routing/management of laser fibers for external fiber-coupled diode laser(s) or external fiber-coupled DPSSLs.

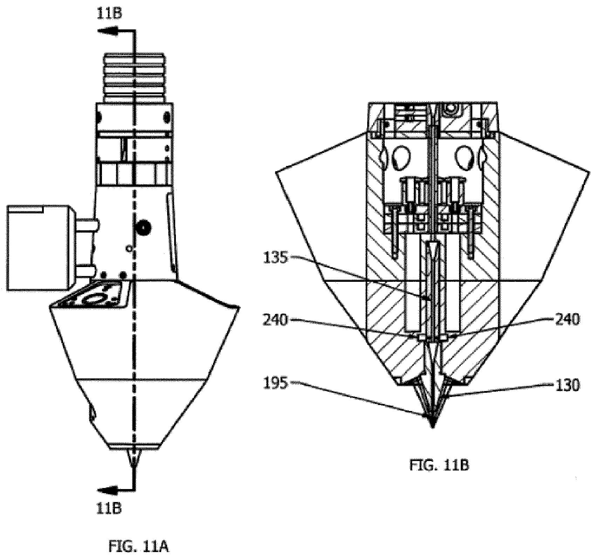

FIG. 11 shows a perspective and cut-away view of an embodiment for a multi-mode laser device for metal manufacturing applications featuring a wire material position sensor for automatically detecting the tip of the wire feed material as it is retracted into the nozzle allow automatic precise control of the distance of the nozzle to the working surface by using the wire feed material as a distance measuring probe.

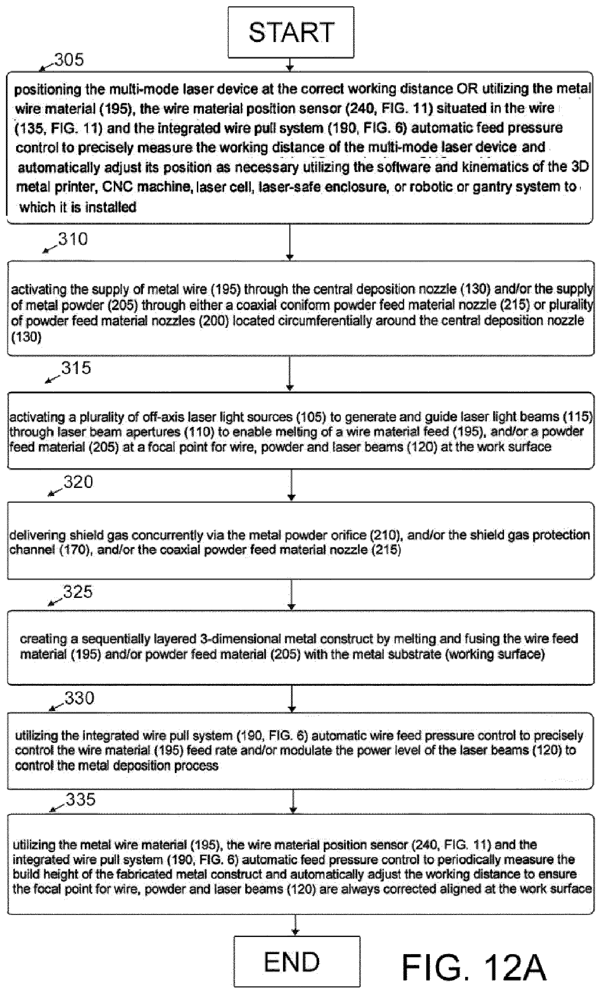

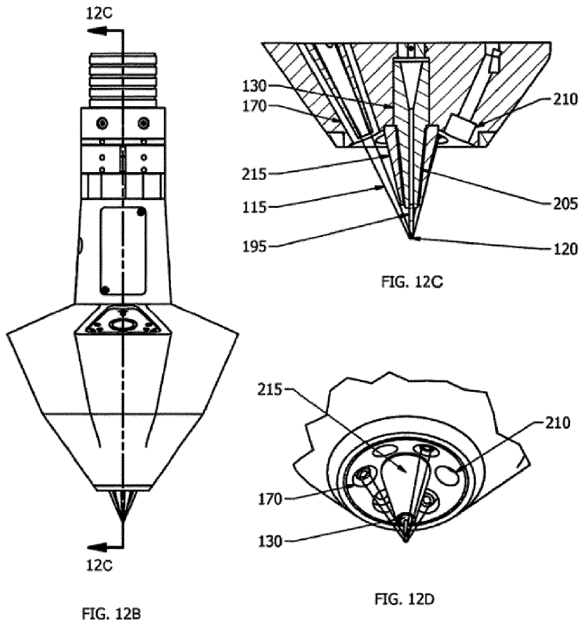

FIG. 12A, FIG. 12B, FIG. 12C, and FIG. 12D show a method for AM, laser cladding or laser welding (non-autogenous mode) using metal wire and metal powder (independently or simultaneously) through a single device with a plurality of off-axis laser beams.

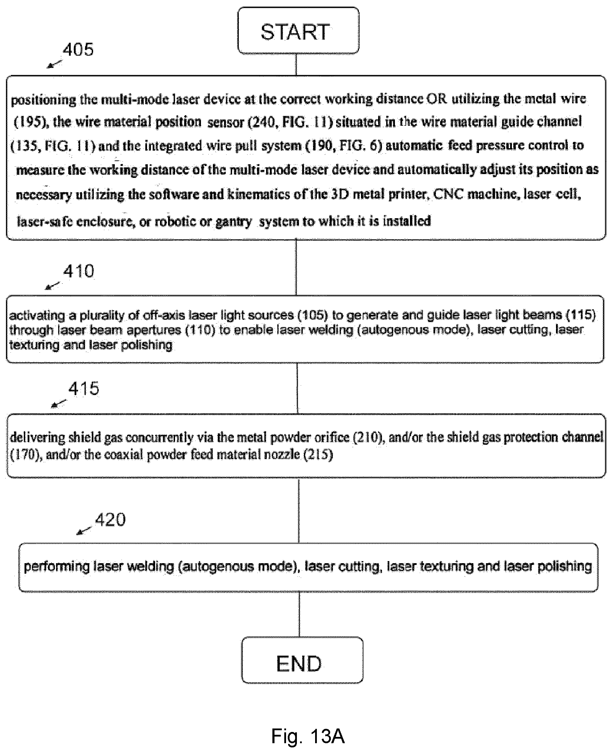

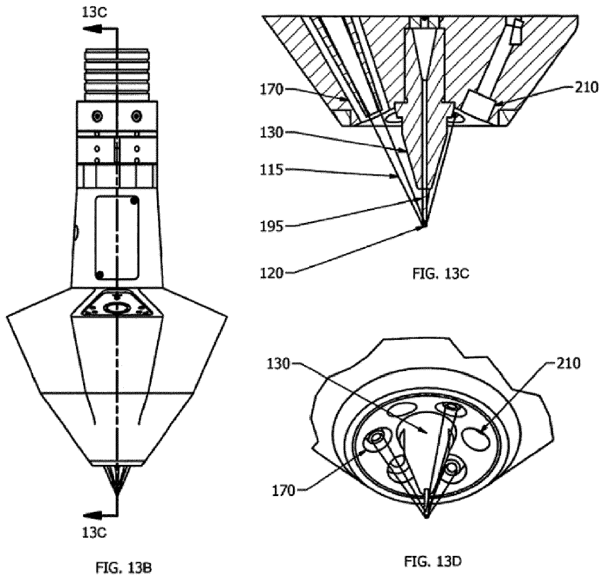

FIG. 13A, FIG. 13B, FIG. 13C, and FIG. 13D show a method for laser welding (autogenous mode), laser cutting, laser texturing and laser polishing through a single device with a plurality of off-axis laser beams.

### DETAILED DESCRIPTION OF EXAMPLES

FIG. 1 shows a side view of an embodiment for a multimode laser device for metal manufacturing applications featuring its supply and laser connections. Shown in FIG. 1 are off-axis laser light sources (105) including but not exclusively, external fiber-coupled diode lasers, external fiber-coupled diode-pumped solid state lasers (DPSSLs), or internal fiber-coupled or fiber-free solid-state diode lasers, off-axis laser beam apertures (110), off-axis laser light beams (115), a wire material feed (125), and a focal point for wire, powder and laser beams (120).

As shown in FIG. 1, a wire feed material (125) is used for metal deposition by combining with a plurality of off-axis laser- fiber sources at the focal point for wire, powder and laser beams (120). In some embodiments, the wire feed supply channel is capable of supplying shield gas though the deposition head. Not shown in FIG. 1 is the possible concurrent or simultaneous supply and feed of metal powder. The deposition feed stock emerges as a material feed towards a focal point for wire, powder and laser beams (120).

FIG. 2 shows a cut-away side view of an embodiment for a multi-mode laser device for metal manufacturing applications featuring its supply and laser connections. In addition to being a cut-away view, FIG. 2 shows additional features from FIG. 1. Shown in FIG. 2 are a central axis wire material guide channel (135) and a central deposition nozzle (130).

FIG. 3A and FIG. 3B show a perspective and expanded view of an embodiment for a multi-mode laser device for metal manufacturing applications illustrating its plurality of laser beams (115) emanating from a plurality of laser light sources (105), including but not exclusively, external fiber-coupled diode laser(s) or external fiber-coupled diode-pumped solid state laser(s) (DPSSL), or internal fiber-coupled or fiber-free solid-state diode lasers.

The multiple lasers are configured as insertable laser assemblies (140) which are precision adjustable and securable with locking mechanisms (140) to deliver high-effective power to a precisely oriented focal point (120) comprising the energy source of the laser manufacturing process. Also shown in FIG. 3A and FIG. 3B are the mounting structure for the multi-mode laser device (145) and a central deposition nozzle (130).

The plurality of off-axis laser beams (115) emanating from a plurality of laser light sources (105), including but not exclusively, external fiber-coupled diode laser(s) or external fiber-coupled diode-pumped solid state laser(s) (DPSSL), or internal fiber-coupled or fiber-free solid-state diode lasers provides laser energy to a precisely oriented focal point (120) comprising the energy source of the laser manufacturing processes described in FIG. 12 for AM, laser cladding or laser welding (non-autogenous mode) using metal wire and metal powder (independently or simultaneously) through with a plurality of off-axis laser beams and FIG. 13 for laser welding (autogenous mode), laser cutting, laser texturing and laser polishing with a plurality of off-axis laser beams.

The plurality of off-axis laser light sources (105) deliver laser beams (115) to the focal point of the laser manufacturing processes (120). The design of the insertable laser assemblies which are precision adjustable and securable with locking mechanisms (140), allows for precisely aligning the of off-axis laser light sources (105) to ensure that the laser beams (115) converge to the focal point of the laser manufacturing process (120).

In some embodiments, the design of the multi-mode laser device allows for angular variation in the inclination of the laser beams (115) from vertical, to facilitate process optimization for energy efficiency of the melting zone created at the focal point of the laser beams (120), and optimization against other considerations such as minimizing the possibility of specular reflection (either back reflection or reflection into another laser lens/fiber assembly) which could damage the laser light sources (105). In some embodiments the plurality of off-axis laser beams (115) are inclined 1 to 30 degrees from vertical. In some embodiments the plurality of off-axis laser beams (115) are inclined 30 to 60 degrees from vertical.

The mounting structure for the multi-mode laser device (145) enables securing the laser device within a print enclosure, robotic system, gantry system, or computer numeric control system, or another machine.

FIG. 4A and Fig. 4B show a perspective and cut-away view of an external fiber-coupled insertable laser assembly for an embodiment of a multi-mode laser device for metal manufacturing applications, illustrating the arrangement of the laser fibers (150), laser fiber couplings (155), collimation and focusing optics (160), laser beam apertures (110), shield gas protection (170) and cooling system (165). Each laser beam aperture (110) encloses its respective laser beam (115) and is designed with a precisely manufactured aperture at its exit point to minimize the possibility of specular reflection (either back reflection or reflection into another laser lens/fiber assembly) which could damage the laser light sources (105). Protective shield gas is delivered through the shield gas protection channel (170) to reduce the potential for particulate, dust or smoke entering the laser beam aperture (110) and causing damage to the collimation and focusing optics (160). The protective shield gas delivered through the shield gas protection channel (170) also facilitates the delivery of an inert gas to the focal point of the laser manufacturing process (120), which is desirable for AM, laser cladding, laser welding, laser cutting, laser texturing and laser polishing processes to reduce oxidation in the heat affected zone.

The main body of the multi-mode laser device provides structure and support for the insertable laser assemblies. The off-axis configuration of laser light sources (105) allows for the incorporation of a single or multiple laser beams (115) in the multi-mode laser device. In the base configuration, three off-axis laser light sources (105) are employed, with 120 degree rotational symmetry between each laser light source (105), although other off-axis configurations are viable and may be used in some embodiments. The design benefits from the off-axis laser architecture because it allows for scaling of laser power by incorporating additional laser light sources (105) circumferentially, and by allowing for on-axis powder and wire material feeds, as illustrated and discussed for FIG. 7 and FIG. 8.

Some configurations may use lasers of different wavelengths and power. In some embodiments, the plurality of laser light sources (105) emit laser light of an infrared spectrum light at a wavelength of between approximately 700 nm and 1 mm. In some embodiments, the plurality of laser light sources emit laser light of a visible spectrum light at a wavelengths of between approximately 400 and 700 nm. In some embodiments, the plurality of laser light sources emit laser light of an ultraviolet spectrum light at a wavelength of between approximately 180 and 400 nm. Other wavelengths may be used as suitable to the feed materials used in the laser manufacturing process.

FIG. 5A and FIG. 5B show a perspective and cut-away view of an internal fiber-coupled or fiber-free insertable laser assembly for an embodiment of a multi-mode laser device for metal manufacturing applications, illustrating the arrangement of the internal solid state diode laser(s) (175), collimation and focusing optics (160), shield gas protection (170), back-reflection protection (185), integrated aiming beam (180), and cooling system (165). The actual arrangement of the collimation and focusing optics (160), back-reflection protection (185) and integrated aiming beam (180) may vary in other embodiments depending on constraints associated with the laser manufacturing application which could require additional laser power, additional protection feature (185) is achieved through a photosensor which is positioned to receive and detect back-reflection and permit rapid momentary deactivation of the respective laser assembly.

The design shown in FIG. 5A and FIG. 5B is flexible to allow the incorporation of a single or multiple internal solid state diode laser(s) (175) within each internal fiber-coupled or fiber-free insertable laser assembly, which allows for an increase in the maximum laser power delivered to the process through the incorporation of additional solid state diode lasers (175) in each laser assembly. For embodiments featuring higher power configurations with more than a single internal solid state diode laser (175), the arrangement of the collimation and focusing optics (160), back-reflection protection (185) and integrated aiming beam (180) may be adjusted, however, the basic architecture and concept remains the same as shown in FIG. 5. The main body of the multi-mode laser device provides structure and support for the insertable laser assemblies. The off-axis configuration of laser light sources (105) allows for the incorporation of a single or multiple laser beams (115) in the multi-mode laser device. In the base configuration, three off-axis laser light sources (105) are employed, with 120 degree rotational symmetry between each laser light source (105), although other off-axis configurations are viable and may be used in some embodiments. The design benefits from the off-axis laser architecture because it allows for scaling of laser power by incorporating additional laser light sources (105) circumferentially, and by allowing for on-axis powder and wire material feeds, as illustrated and discussed for FIG. 7 and FIG. 8.

Some configurations may use lasers of different wavelengths and power. In some embodiments, the plurality of laser light sources (105) emit laser light of an infrared spectrum light at a wavelength of between approximately 700 nm and 1 mm. In some embodiments, the plurality of laser light sources emit laser light of a visible spectrum light at a wavelengths of between approximately 400 and 700 nm. In some embodiments, the plurality of laser light sources emit laser light of an ultraviolet spectrum light at a wavelength of between approximately 180 and 400 nm. Other wavelengths may be used as suitable to the feed materials used in the laser manufacturing process.

FIG. 6 shows a perspective view of an embodiment for a multi-mode laser device for metal manufacturing applications featuring its integrated wire feed (pull) system (190). Also shown in FIG. 6 is the associated wire material guide channel (135). In some embodiments, the integrated wire feed (pull) system (190) is housed within the mounting structure of the laser device (145, FIG. 3A). In other embodiments, the integrated wire feed (pull) system (190) is situated outside the mounting structure of the laser device (145, FIG. 3A).

The integrated wire pull system (190) with automatic feed pressure control serves as a control mechanism for pulling deposition wire from the wire supply spool situated within the adjoining equipment and delivering deposition wire to the central deposition nozzle (130, FIG. 3A) where it is used in laser manufacturing process for AM, laser cladding or laser welding (nonautogenous mode) by intersecting with the focal point of the laser beams (120). The feed pressure of the wire is regulated by automatically measuring the torque of the wire pull system (190) motor and adjusting the motor current to adjust wire feed rate and maintain a steady state wire feed pressure. In other embodiments, the feed pressure of the wire is used in software to automatically modulate the power level of the laser beams (120) to provide optimal control of the metal deposition process. In other embodiments, the wire feed rate and power level of the laser beams (120) are adjusted independently or simultaneously.

FIG. 7 shows a bottom view of an embodiment for a multi-mode laser device for metal manufacturing applications featuring the underside of the device illustrating its central deposition nozzle (130) for supplying wire feed material (195), powder feed material nozzles (200) for supplying powder feed material (205), process gas orifices (210) and laser beams (115).

Not shown in FIG. 7 is an optional nozzle cowling (220, FIG. 9) which may be installed as shown in FIG. 9 for some embodiments of the multi-mode laser device. The nozzle cowling (220, FIG. 9) may provide improvements in the distribution of process and shield gas in some laser manufacturing applications.

FIG. 8 shows a bottom view of an embodiment for a multi-mode laser device for metal manufacturing applications featuring two methods for delivering powder coaxially. The first method consists of a coaxial coniform powder feed material nozzle (215) which encloses the central deposition nozzle (130) and wire material guide channel (135) and provides a coniform distribution of powder coaxially to the focal point for wire, powder and laser beams (120, FIG. 1) at the working surface. The second method consists of multiple independent off-axis powder feed material nozzles (200) located circumferentially around the central deposition nozzle (130) providing individual collimated jets of powder to the focal point for wire, powder and laser beams (120, FIG. 1) at the working surface.

FIG. 9A and FIG. 9B show a perspective and cut-away view of an embodiment for a multi-mode laser device for metal manufacturing applications featuring its process gas distribution and supply channels (210) to the working surface of the process, in conjunction with a detachable nozzle cowling (220). The detachable and optional nozzle cowling (220) may provide improvements in the distribution of process and shield gas in some laser manufacturing applications. The process gas channels (210) provide the capability to supply inert gas, for example argon, to the focal point for wire, powder and laser beams (120, FIG. 1) at the working surface.

FIG. 10A, FIG. 10B and FIG 10C show a perspective, cut-away and expanded view of an embodiment for a multi-mode laser device for metal manufacturing applications featuring its head supply neck coupling (225) which facilitates a quick-disconnect and rapid reconnection of the laser device to the incoming supply lines contained in the supply conduit (230). The supply lines comprise electrical (245), water cooling (165), process gas (210), wire material guide channel (135) and powder feed channel (205) quick disconnect/reconnect connections, in addition to routing/management (235) of laser fibers (150) for external fiber-coupled diode laser(s) or external fiber-coupled DPSSLs. The water cooling line fittings (165) provide an inlet and exit for cooling water to maintain the multi-mode laser device at operational temperature. The coolant may be a liquid fluid, such as water.

Also shown in FIG. 10B are cone shaped features of the wire material guide channel (135) which help to guide the wire material from the supply conduit (230) through the supply neck coupling (225) and into the wire material guide channel (135) of the multi-mode laser device.

In some embodiments, these cone shaped features also facilitate the passage and interchange of wires when more than one metal wire is used in the process.

FIG. 11A and FIG. 11B show a perspective and cut-away view of an embodiment for a multi-mode laser device for metal manufacturing applications featuring a wire material position sensor (240) for automatically detecting the tip of the wire feed material (195) as it is retracted through the central deposition nozzle (130) and into the wire material guide channel (135). The wire material position sensor uses a photoelectric, capacitive or hall-effect electrical sensor to automatically control the precise distance of the multi-mode laser device central deposition nozzle (130) tip to the working surface by using the wire feed material (195) as a distance measuring probe. This is achieved by detecting the exact position of the tip of the wire feed material (195) as it is retracted up through the wire material guide channel (135), and then using this information in software, combined with the integrated wire pull system (190, FIG. 6) automatic feed pressure control to precisely insert the wire the exact distance to the focal point of the laser manufacturing process (120, FIG. 3A).

FIG. 12A, FIG. 12B, FIG. 12C, and FIG. 12D show a method for AM, laser cladding or laser welding (non-autogenous mode) using metal wire (195) and metal powder (205), independently or simultaneously, through a single device with a plurality of off-axis laser beams (115). In this embodiment, the metal powder feed can be supplied via a coaxial powder feed material nozzle (215, FIG. 8) which encloses the central deposition nozzle (130, FIG. 8) and wire material guide channel (135, FIG. 8) or through multiple independent off-axis powder feed material nozzles (200, FIG. 8) located circumferentially around the central deposition nozzle (130, FIG. 8) providing individual collimated jets of powder to the focal point for wire, powder and laser beams (120, FIG. 1) at the working surface.

At step 305, manually positioning the multi-mode laser device at the correct working distance OR utilizing the metal wire material (195), the wire material position sensor (240, FIG. 11) situated in the wire material guide channel (135, FIG. 11) and the integrated wire pull system (190, FIG. 6) automatic feed pressure control to precisely measure the working distance of the multi-mode laser device and automatically adjust its position as necessary utilizing the software and kinematics of the 3D metal printer, CNC machine, laser cell, laser-safe enclosure, or robotic or gantry system to which it is installed.

At step 310, activating the supply of metal wire (195) through the central deposition nozzle (130) and/or the supply of metal powder (205) through either a coaxial coniform powder feed material nozzle (215) or plurality of powder feed material nozzles (200) located circumferentially around the central deposition nozzle (130).

At step 315, activating a plurality of off-axis laser light sources (105) to generate and guide laser light beams (115) through laser beam apertures (110) to enable melting of a wire material feed (195), and/or a powder feed material (205) at a focal point for wire, powder and laser beams (120) at the work surface.

At step 320, delivering shield gas concurrently via the metal powder orifice (210), and/or the shield gas protection channel (170), and/or the coaxial powder feed material nozzle (215).

At step 325, creating a sequentially layered 3-dimensional metal construct by melting and fusing the wire feed material (195) and/or powder feed material (205) with the metal substrate (working surface).

At step 330, utilizing the integrated wire pull system (190, FIG. 6) automatic wire feed pressure control to precisely control the wire material (195) feed rate and/or modulate the power level of the laser beams (120) to control the metal deposition process.

At step 335, utilizing the metal wire material (195), the wire material position sensor (240, FIG. 11) and the integrated wire pull system (190, FIG. 6) automatic feed pressure control to periodically measure the build height of the fabricated metal construct and automatically adjust the working distance to ensure the focal point for wire, powder and laser beams (120) are always corrected aligned at the work surface.

FIG. 13 A, FIG. 13B, FIG. 13C, and FIG. 13D show a method for laser welding (autogenous mode), laser cutting, laser texturing and laser polishing through a single device with a plurality of off-axis laser beams (115). In this embodiment, metal powder and metal wire feedstock are not used by the process and only the laser beams (115) are employed. However, the metal powder feed channels (coaxial nozzle (215, FIG. 8) and/or multiple independent off-axis powder feed material nozzles (200, FIG. 8)) may be used to supply shield gas to protect the build surface from oxidation effects. In addition, metal wire material (195) may be present and used for the purpose of serving as a distance measuring probe as described in step 405.

At step 405, manually positioning the multi-mode laser device at the correct working distance OR utilizing the metal wire material (195), the wire material position sensor (240, FIG. 11) situated in the wire material guide channel (135, FIG. 11) and the integrated wire pull system (190, FIG. 6) automatic feed pressure control to precisely measure the working distance of the multi-mode laser device and automatically adjust its position as necessary utilizing the software and kinematics of the 3D metal printer, CNC machine, laser cell, laser-safe enclosure, or robotic or gantry system to which it is installed.

At step 410, activating a plurality of off-axis laser light sources (105) to generate and guide laser light beams (115) through laser beam apertures (110) to enable laser welding (autogenous mode), laser cutting, laser texturing and laser polishing.

At step 415, delivering shield gas concurrently via the metal powder orifice (210), and/or the shield gas protection channel (170), and/or the coaxial powder feed material nozzle (215).

At step 420, performing laser welding (autogenous mode), laser cutting, laser texturing and laser polishing.

## Claims

1. A multi-mode laser device comprising:
an integrated wire pull system (190) with automatic feed pressure control capable of delivering a metal wire (195) from a central axis wire feed guide tube through a central deposition nozzle (130) in the concurrent deposition housing to a focal point (120) for wire, powder and laser.
wherein in use, a feed pressure of the wire (195) is regulated by automatically measuring a torque of a wire pull system motor and adjusting a motor current such that a wire feed rate is adjusted and a wire feed pressure is maintained in a steady state;
a plurality of off-axis laser light sources (105) for delivering laser light beams (115) to the focal point (120) at a work surface, wherein
the plurality of off-axis laser light sources (105) comprises a plurality of laser assemblies comprising back-reflection protection (185);
a shield gas delivery system (170) capable of delivering shield gas to the focal point (120) for wire, powder and laser, and;
a cooling system (165),
wherein the multi-mode laser device is capable of performing one or more of additive manufacturing, laser cladding and nonautogenous laser welding,
**characterized in that** the plurality of off-axis laser light sources (105) comprises a plurality of insertable laser assemblies (140) and the back-reflection protection (185) is achieved through a photo-sensor which is configured to detect back-reflection and which is configured to permit momentary deactivation of the respective laser light source (105).

2. The multi-mode laser device of claim 1, further comprising a coaxial powder feed channel for delivery of the powder feed material to the focal point (120), and wherein the device is furthermore configured to perform additive manufacturing using metal wire and metal powder simultaneously.

3. The multi-mode laser device of claim 1 or claim 2, wherein the plurality of insertable laser assemblies comprises internal solid-state diode lasers (175).

4. The multi-mode laser device of claim 3, wherein the plurality of internal solid-state diode lasers (175) is configured to accommodate multiple diode lasers within one same laser assembly to facilitate increased laser power.

5. The multi-mode laser device of claim 3 or 4, wherein the plurality of internal solid-state diode lasers (175) is each coordinated to a respective laser assembly and capable of aiming a beam to aid alignment of the respective laser assembly.

6. The multi-mode laser device of any of claims 1 - 5, wherein the multi-mode laser device is configured to perform additive manufacturing using metal wire and metal powder independently or simultaneously, laser cladding, autogenous and non-autogenous laser welding, laser cutting, laser texturing and/or laser polishing, through the implementation of independent coaxial wire (215) and power feed channels (200).

7. The multi-mode laser device of claim 3, wherein the plurality of off-axis laser light sources (105) comprises secure locking mechanisms (140) configured to perform precision adjustment and configured to deliver high-effective power to a precisely oriented focal point.

8. The multi-mode laser device of claim 3, wherein the plurality of laser light sources (105) emits laser light of an infrared spectrum light or of a visible spectrum light or of an ultraviolet spectrum light.

9. The multi-mode laser device of claim 3, further comprising a removable shield gas (170) cowling for diffusing shield gas onto a working surface.

10. The multi-mode laser device of claim 3, wherein a plurality of off-axis laser light lens assemblies are inclined from 1 to 60 degrees inclusive from vertical.

11. The multi-mode laser device of claim 3, which further comprises a wire feed channel incorporating a wire material position sensor (240) for automatically detecting a tip of a wire feed material (195) as the wire feed material (195) is retracted through the central deposition nozzle (130) and into a wire material guide channel.

12. The multi-mode laser device of claim 11, wherein the wire material position sensor (240) comprises a photoelectric or capacitive or hall-effect electrical sensor capable of automatically controlling a precise distance of a multi-mode laser device central deposition nozzle (130) tip to a working surface by detecting the exact position of the tip of the wire feed material (195) as the wire feed material is retracted up through the wire material guide channel (135), and calculating an integrated wire pull system (190) automatic feed pressure control to precisely insert the wire an exact distance to a focal point (120) of the laser manufacturing process.

13. The multi-mode laser device of claim 3, wherein powder coaxially is delivered as a coniform nozzle (215) nested around the wire feed channel or in multiple independent off-axis powder nozzles (200) providing individual collimated jets of powder located circumferentially surrounding the wire feed channel.

## Patentansprüche

1. Eine Multimode-Laservorrichtung, bestehend aus:
einem integrierten Drahtzuführsystem (190) mit automatischer Zuführdruckregelung, das in der Lage ist, einen Metalldraht (195) von einem Drahtzuführführungsrohr mit zentraler Achse durch eine zentrale Abscheidungsdüse (130) im Gehäuse für die gleichzeitige Abscheidung zu einem Brennpunkt (120) für Draht, Pulver und Laser zuzuführen,
wobei im Betrieb,
der Vorschubdruck des Drahtes (195) geregelt wird, indem das Drehmoment des Motors eines Drahtvorschubsystems automatisch gemessen und der Motorstrom so angepasst wird, dass die Drahtvorschubgeschwindigkeit angepasst und der Drahtvorschubdruck auf einem konstanten Wert gehalten wird;
einer Vielzahl von außeraxialen Laserlichtquellen (105) zum Leiten von Laserlichtstrahlen (115) auf den Brennpunkt (120) an einer Arbeitsfläche, wobei
die Vielzahl von außeraxialen Laserlichtquellen (105) eine Vielzahl von Lasereinheiten umfasst, die einen Rückreflexionsschutz (185) aufweisen;
einem Schutzgaszufuhrsystem (170), das in der Lage ist, Schutzgas zum Brennpunkt (120) für Draht, Pulver und Laser zuzuführen, und;
einem Kühlsystem (165),
wobei die Multimode-Laservorrichtung in der Lage ist, eine oder mehrere der folgenden Verfahren auszuführen: additive Fertigung, Laserauftragschweißen und nichtautogenes Laserschweißen,
**dadurch gekennzeichnet, dass** die mehreren außeraxialen Laserlichtquellen (105) mehrere einsetzbare Lasereinheiten (140) umfassen und der Rückreflexionsschutz (185) durch einen Fotosensor erreicht wird, der so ausgelegt ist, dass er Rückreflexionen erfasst, und der so ausgelegt ist, dass er eine kurzzeitige Deaktivierung der jeweiligen Laserlichtquelle (105) ermöglicht.

2. Die Multimode-Laservorrichtung nach Anspruch 1, die ferner einen koaxialen Pulverzufuhrkanal zur Zuführung des Pulvermaterials zum Brennpunkt (120) umfasst, wobei die Vorrichtung weiterhin so ausgelegt ist, dass sie die additive Fertigung unter gleichzeitiger Verwendung von Metalldraht und Metallpulver vornimmt.

3. Die Multimode-Laservorrichtung nach Anspruch 1 oder Anspruch 2, wobei die mehreren einsetzbaren Lasereinheiten interne Festkörperdiodenlaser (175) umfassen.

4. Die Multimode-Laservorrichtung nach Anspruch 3, wobei die Vielzahl interner Festkörperdiodenlaser (175) so ausgelegt ist, dass mehrere Diodenlaser in ein und derselben Laserbaugruppe untergebracht werden können, um eine höhere Laserleistung zu ermöglichen.

5. Multimode-Laservorrichtung nach Anspruch 3 oder 4, wobei die mehreren internen Festkörperdiodenlaser (175) jeweils einer entsprechenden Lasereinheit zugeordnet sind und einen Strahl ausrichten können, um die Ausrichtung der jeweiligen Lasereinheit zu unterstützen.

6. Die Multimode-Laservorrichtung nach einem der Ansprüche 1 bis 5, wobei die Multimode-Laservorrichtung so ausgelegt ist, dass sie additive Fertigung unter Verwendung von Metalldraht und Metallpulver unabhängig voneinander oder gleichzeitig, Laserauftragschweißen, autogenes und nicht-autogenes Laserschweißen, Laserschneiden, Laserstrukturierung und / oder Laserpolieren durchführt durch die Verwendung unabhängiger koaxialer Draht- (215) und Leistungszufuhrkanäle (200).

7. Die Multimode-Laservorrichtung nach Anspruch 3, wobei die Vielzahl von außeraxialen Laserlichtquellen (105) sichere Verriegelungsmechanismen (140) umfasst, die zur Durchführung einer Präzisionsjustierung ausgelegt sind und eine hohe effektive Leistung an einen präzise ausgerichteten Brennpunkt abgeben.

8. Die Multimode-Laservorrichtung nach Anspruch 3, wobei die mehreren Laserlichtquellen (105) Laserlicht im Infrarot-, im sichtbaren oder im ultravioletten Spektralbereich emittieren.

9. Die Multimode-Laservorrichtung nach Anspruch 3, die ferner eine abnehmbare Schutzgas-Abdeckung (170) zum Verteilen von Schutzgas auf eine Arbeitsfläche umfasst.

10. Die Multimode-Laservorrichtung nach Anspruch 3, wobei mehrere außeraxiale Laserlichtlinsenanordnungen in einem Winkel von 1 bis einschließlich 60 Grad zur Vertikalen geneigt sind.

11. Die Multimode-Laservorrichtung nach Anspruch 3, die ferner einen Drahtzuführkanal umfasst, der einen Drahtmaterial-Positionssensor (240) besitzt, um die Spitze eines Drahtzuführmaterials (195) automatisch zu erfassen, wenn das Drahtzuführmaterial (195) durch die zentrale Abscheidungsdüse (130) zurückgezogen und in einen Drahtmaterial-Führungskanal geleitet wird.

12. Die Multimode-Laservorrichtung nach Anspruch 11, wobei der Drahtmaterial-Positionssensor (240) einen fotoelektrischen, kapazitiven oder auf dem Hall-Effekt basierenden elektrischen Sensor umfasst, der in der Lage ist, einen präzisen Abstand der zentralen Abscheidungsdüse (130) zur Arbeitsfläche automatisch zu regeln, indem er die genaue Position der Spitze des Drahtzufuhrmaterials (195) erfasst, während das Drahtzufuhrmaterial durch den Drahtmaterial-Führungskanal (135) nach oben zurückgezogen wird, durch Berechnung einer automatischen Vorschubdruckregelung des integrierten Drahtzugsystems (190), um den Draht in einem exakten Abstand zu einem Brennpunkt (120) des Laserfertigungsprozesses präzise einzuführen.

13. Die Multimode-Laservorrichtung nach Anspruch 3, wobei das Pulver koaxial über eine konische Düse (215), die um den Drahtzuführkanal herum angeordnet ist, oder über mehrere unabhängige, außeraxiale Pulverdüsen (200) zugeführt wird, die so einzelne kollimierte Pulverstrahlen erzeugen, die den Drahtzuführkanal in Umfangsrichtung umgeben.

## Revendications

1. Un dispositif à laser multi-mode comprenant :
un système de tire-fil intégré (190) avec un contrôle automatique de la pression d'alimentation capable de distribuer un fil métallique (195) depuis un tube guidant le dévidage du fil à axe central à travers une buse de dépôt centrale (130) dans le boîtier de dépôt concomitant jusqu'à un point focal (120) pour le fil, la poudre et le laser,
dans lequel, lors de l'utilisation,
la pression d'alimentation en fil (195) est contrôlée en mesurant automatiquement le couple d'un moteur du système de tire-fil et en ajustant le courant du moteur de sorte à ajuster la vitesse d'alimentation en fil soit ajustée et à maintenir la pression d'alimentation du fil dans un état d'équilibre ;
de très nombreuses sources de lumière laser hors axe (105) pour diriger des faisceaux de lumière laser (115) sur le point focal (120) au niveau d'une surface de travail, dans laquelle
de très nombreuses sources de lumière laser hors axe (105) comprennent une multitude d'ensembles laser incluant une protection contre la rétroréflexion (185) ;
un système délivrant du gaz protecteur (170) capable de fournir du gaz protecteur au point focal (120) pour le fil, la poudre et le laser, et ;
un système de refroidissement (165),
dans lequel le dispositif à laser multi-mode est capable d'effectuer une ou plusieurs opérations, notamment la fabrication additive, le placage laser et le soudage laser non autogène,
**caractérisé en ce que** les très nombreuses sources de lumière laser hors axe (105) comprennent un grand nombre d'ensembles laser insérables (140) et **en ce que** la protection contre la rétroréflexion (185) est assurée par un photodétecteur qui est configuré pour détecter la rétroréflexion et pour permettre la désactivation momentanée de la source de lumière laser (105) correspondante.

2. Le dispositif à laser multi-mode selon la revendication 1, comprenant en outre un canal coaxial délivrant la poudre pour distribuer le matériau en poudre au point focal (120), et dans lequel le dispositif est en outre configuré pour effectuer une fabrication additive en utilisant simultanément du fil métallique et de la poudre métallique.

3. Le dispositif à laser multi-mode selon la revendication 1 ou la revendication 2, dans lequel le grand nombre d'ensembles laser insérables comprennent des diodes laser internes à l'état solide (175).

4. Le dispositif à laser multi-mode selon la revendication 3, dans lequel les très nombreuses diodes laser internes à l'état solide (175) sont configurées pour accueillir plusieurs diodes laser au sein d'un même ensemble laser afin d'augmenter facilement la puissance laser.

5. Le dispositif à laser multi-mode selon la revendication 3 ou 4, dans lequel chacun desdites très nombreux lasers à diode internes à l'état solide (175) sont coordonnés avec un ensemble laser respectif et capables de diriger un faisceau pour faciliter l'alignement de l'ensemble laser respectif.

6. Le dispositif à laser multi-mode selon l'une quelconque des revendications 1 à 5, dans lequel le dispositif à laser multi-mode est configuré pour effectuer une fabrication additive en utilisant un fil métallique et une poudre métallique séparément ou ensemble, un placage laser, un soudage laser autogène et non autogène, une découpe laser, une texturation laser et/ou un polissage laser, grâce à la mise en œuvre d'un fil coaxial indépendant (215) et de canaux distribuant de la poudre (200).

7. Le dispositif à laser multi-mode selon la revendication 3, dans lequel les très nombreuses sources de lumière laser hors axe (105) comprennent des mécanismes de verrouillage sécurisés (140) configurés pour effectuer un réglage précis et pour fournir une puissance élevée efficace sur un point focal orienté avec précision.

8. Le dispositif à laser multi-mode selon la revendication 3, dans lequel les très nombreuses sources de lumière laser (105) émettent une lumière laser d'un spectre infrarouge ou d'un spectre visible ou d'un spectre ultraviolet.

9. Le dispositif à laser multi-mode selon la revendication 3, comprenant en outre un capot amovible pour le gaz protecteur (170) destiné à diffuser le gaz protecteur sur une surface de travail.

10. Le dispositif à laser multi-mode selon la revendication 3, dans lequel les très nombreux ensembles de lentilles pour lumière laser hors axe présentent une inclinaison allant de 1 à 60 degrés inclus par rapport à l'axe vertical.

11. Le dispositif à laser multi-mode selon la revendication 3, qui comprend en outre un canal distribuant le fil incorporant un capteur de position du matériau filaire (240) pour détecter automatiquement une extrémité d'un matériau filaire (195) lorsque le matériau filaire (195) est rétracté à travers la buse de dépôt centrale (130) et dans un canal guidant le matériau filaire.

12. Le dispositif à laser multi-mode selon la revendication 11, dans lequel le capteur de position du matériau filaire (240) comprend un capteur électrique photoélectrique ou capacitif ou à effet Hall capable de contrôler automatiquement une distance précise entre la pointe de la buse de dépôt centrale (130) du dispositif laser multimode et une surface de travail en détectant la position exacte de la pointe du matériau filaire (195) lorsque le matériau filaire est rétracté vers le haut à travers le canal guidant le matériau filaire (135), et en calculant le contrôle automatique de la pression d'alimentation d'un système de tire-fil intégré (190) pour insérer précisément le fil à une distance exacte d'un point focal (120) du procédé de fabrication laser.

13. Le dispositif à laser multi-mode selon la revendication 3, dans lequel la poudre est délivrée coaxialement à l'aide d'une buse de forme conique (215) emboîtée autour du canal distribuant le fil ou dans plusieurs buses délivrant de la poudre indépendantes hors axe (200) fournissant des jets de poudre collimatés individuels, positionnés de manière circonférentielle autour du canal distribuant le fil.
